# EUROPEAN PATENT APPLICATION

(11) **EP 3 381 791 A1**
(43) Date of publication of application: **03.10.2018**
(21) Application number: 17163898.4
(22) Date of filing: 30.03.2017
(51) Int. Cl.: B63H 21/38

(54) **A VESSEL INCLUDING A HYBRID PROPULSION SYSTEM**

(71) Applicant: BV Scheepswerf Damen Gorinchem, 4200 AA Gorinchem (NL)
(72) Inventor: van Schaik, Jan Hendrik, 4031 KS Ingen (NL)
(74) Representative: De Vries & Metman

(57) **Abstract**

A vessel including a hybrid propulsion system comprises a main engine (2), a propeller (4), an electric motor (3), wherein the propeller (4) is drivable by at least one of the main engine (2) and the electric motor (3), an electrical circuit (7) which is connected to the electric motor (3) for providing electrical energy to the electric motor (3), and an engine generator set including a generator engine (8) and a generator (9) which is connected to the electric circuit (7) for providing electrical energy to the electrical circuit (7). One of both engines (2, 8) runs on a first main fuel type and the other one (2, 8) runs on a second main fuel type, wherein the first and second main fuel types are different.

## Description

The present invention relates to a vessel including a hybrid propulsion system, comprising a main engine, a propeller, an electric motor, wherein the propeller is drivable by at least one of the main engine and the electric motor, an electrical circuit which is connected to the electric motor for providing electrical energy to the electric motor, and an engine generator set including a generator engine and a generator being connected to the electrical circuit for providing electrical energy to the electrical circuit.

Such a vessel is known, since the applicant has developed a tugboat which comprises a main engine for mechanically driving the propeller and an engine generator set which can indirectly drive the propeller through the electrical motor and the electrical circuit. A hybrid propulsion system is advantageous in tugboats since they have highly variable operational and performance requirements.

An object of the invention is to provide a vessel including a hybrid propulsion system which has a higher degree of operating flexibility.

This object is accomplished with the hydraulic device according to the invention, which is characterized in that one of both engines runs on a first main fuel type and the other one runs on a second main fuel type, wherein the first and second main fuel types are different.

An advantage of the invention is that the hybrid propulsion system provides a great variety of possible operating modes, since it is possible to select propulsion energy generated by combustion of two different fuel types. Running on a certain fuel type may be dependent on actual circumstances because of specific beneficial properties. For example, in case of quickly varying engine loads a combination of one fuel type and a corresponding engine may generate lower polluting emissions than a combination of the other fuel and a corresponding engine, whereas the situation may be different in case of operating at constant speed. Such selections can be made for a lot of different situations in order to find an appropriate compromise for fuel consumption, exhaust gas emission, noise emission, propulsion response time, and the like. It is noted that the word 'main' in the terms 'first main fuel type' and 'second main fuel type' indicates the essential fuel type which is used by the engine. For example, a dual fuel natural gas engine which mainly runs on a gaseous fuel but which injects a small amount of a liquid pilot diesel fuel for starting combustion has natural gas as main fuel type.

In a specific embodiment one of both engines is a compression ignition engine, whereas the other one is a spark ignition engine. A compression ignition engine typically has a higher efficiency than a spark ignition engine, particularly under part-load conditions, which different characteristics can be utilized under certain circumstances.

In practice the first main fuel type may be diesel and the second main fuel type may be natural gas.

Both engines may be single fuel engines, i.e. the engines do not use a mixture of fuel types such as in case of pilot injection in specific natural gas engines.

Preferably, the main engine is a natural gas engine and the generator engine is a diesel engine, since a natural gas engine has typical advantages under circumstances when a diesel engine has disadvantages and the other way around. For example, under part-load conditions the diesel engine may be used because of its higher efficiency, whereas at high loads the natural gas engine may be used because of its lower soot emission.

The electric motor may be adjustable to operate as a generator for providing electrical energy to the electrical circuit, whereas the electric motor is drivable by the main engine. In this case the main engine can be used for propelling the vessel and may provide electrical energy for operating auxiliary equipment, as well.

The main engine, electric motor and propeller may form a first propulsion combination, whereas the vessel is provided with a second propulsion combination including another main engine running on the same fuel type as the main engine of the first propulsion combination, another electric motor and another propeller, wherein the electrical circuit is configured to provide electrical energy to the electric motors of both propulsion combinations. In this configurations it is possible to drive the propeller of the first propulsion combination directly via the corresponding main engine, whereas the same main engine of the first propulsion combination also drives the corresponding electric motor as a generator which in turn provides electrical energy to the electric motor of the second propulsion combination in order to drive the propeller of the second propulsion combination. In this case only one main engine drives both propellers. It is also possible to drive both propellers by the generator set.

The generator set may be a first generator set, wherein the vessel is provided with a second generator set for providing electrical energy to the electrical circuit, wherein the second generator set runs on the same fuel type as the first generator set.

The invention will hereafter be elucidated with reference to a very schematic drawing showing an embodiment of the invention by way of example.

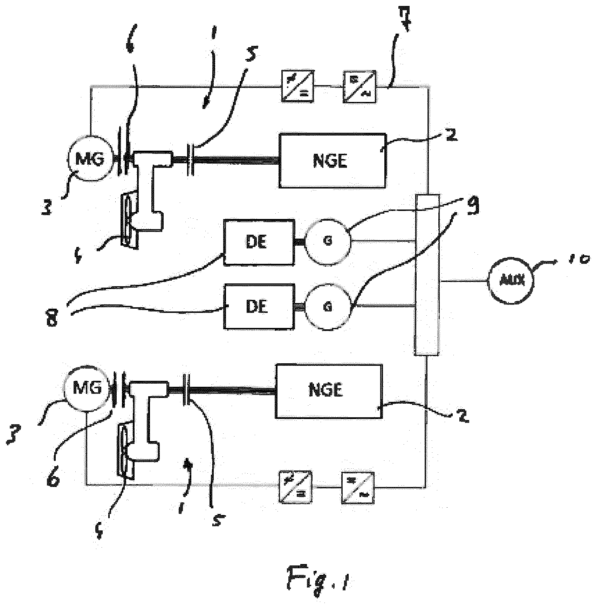

Fig. 1 is a schematic diagram of a hybrid propulsion system of an embodiment of a vessel according to the invention.

Fig. 1 shows a hybrid propulsion system of an embodiment of a vessel according to the invention. The vessel may be a tugboat which typically operates under dynamic conditions in terms of sailing speed in a harbour. The hybrid propulsion system as shown in Fig. 1 has two similar propulsion combinations 1 for propelling the vessel, each propulsion combination 1 comprising a main engine 2, an electric motor-generator 3 and a propeller 4. The propeller may be an azimuth thruster which is typically applicable in case of a tugboat. The propeller 4 is drivable by at least one of the main engine 2 and the electric motor-generator 3 when the latter is operated in motor mode.

The main engine 2 of a propulsion combination 1 can be mechanically coupled to the propeller 4 via a first clutch 5 and the electric motor-generator 3 can be mechanically coupled to the propeller 4 via a second clutch 6. The second clutch 6 is shown as a mechanical clutch mechanism in Fig. 1, but it is also conceivable that the motor-generator 3 is always mechanically coupled to the propeller 4 whereas it is drivably engaged or disengaged to the propeller 4 via an electrical control system of the motor-generator 3.

The hybrid propulsion system is provided with a control system (not shown) which controls the clutches 5, 6, the electric motor-generators 3 and the main engines 2. The hybrid propulsion system also comprises an electrical circuit 7 for providing electrical energy to the electric motor-generators 3 in their motor modes or drawing electrical energy from the motor-generators 3 in their generator modes.

Furthermore, the hybrid propulsion system comprises two engine generator sets. Each set includes a generator engine 8 and a generator 9 for providing electrical energy to the electrical circuit 7.

In the system as shown in Fig. 1 the generator engines 8 are diesel engines, whereas the main engines 2 are natural gas engines. In other words, the generator engines 8 run on diesel as a first main fuel type and the main engines 2 run on natural gas as a second main fuel type. In this case the engines 2, 8 are single fuel engines which entirely run on natural gas and diesel, respectively. The natural gas engines 2 are spark ignition engines, but in an alternatively embodiment they may be compression ignition engines, mainly running on natural gas, but including diesel pilot injection.

Fig. 1 shows that the electrical circuit 7 is provided with converters for conversion from AC to DC and DC to AC. Moreover, auxiliary devices 10 such as winches or other equipment are electrically coupled to the electrical circuit 7.

The hybrid propulsion system provides a great variety of possible operating modes. For example, in case of full natural gas mode the first clutches 5 will be engaged in order to drive the propellers 4, whereas the second clutches 6 may be engaged to generate electrical power by the motor-generators 3 and to provide electrical energy to the electrical circuit 7, for example for driving the auxiliary devices 10 or energizing non-propulsive power needs such as a hotel load distribution system. In case of full diesel mode the first clutches 5 will be disengaged and the second clutches 6 will be engaged whereas the motor-generators 3 are operated in motor mode in order to drive the propellers 4; in this case the diesel engines 8 of the engine generator sets provide electrical energy for operating the motor-generators 3. If a low power level is required one of the diesel engines 8 may be shut-off, for example. Although propulsion energy to the propeller 4 is supplied indirectly via a generator and a motor in this case, it may still be advantageous in terms of energy consumption since a diesel engine operates at higher part-load efficiency than a natural gas engine. Furthermore, both the diesel engines 8 and the natural gas engines 2 may be operated simultaneously. In that case, the first and second clutches 5, 6 are engaged such that each propeller 4 is driven by both the corresponding motor-generator 3 and the corresponding natural gas engine 2.

It is also possible to operate the hybrid propulsion system at full natural gas mode and drive both propellers 4 by operating only one of the natural gas engines 2. In that case one of the natural gas engines 2 directly drives the corresponding propeller 4 via the corresponding engaged clutch 5, whereas the same engine 2 also drives the corresponding electric motor 3 via the corresponding engaged clutch 6 as a generator which in turn provides electrical energy to the other electric motor 3 via the electrical circuit 7 in order to drive the other propeller 4.

It may be clear that the invention provides a great variety of operating modes; in addition to selecting direct propulsion by means of the main engines 2 and/or indirect propulsion by means of the engines 8 of the engine generator sets it is also possible to utilize specific benefits of running on natural gas or diesel under certain circumstances.

The invention is not limited to the embodiment shown in the drawing and described hereinbefore, which may be varied in different manners within the scope of the claims and their technical equivalents. For example, the fuel types may be alternative combinations, for example the first main fuel type may be a regular diesel fuel whereas the second main fuel type may be a biodiesel or vice versa. Furthermore, the electrical circuit may be provided with a battery so as to store electrical energy for providing electrical energy to auxiliary equipment under conditions in which the engines are shut-off.

## Claims

1. A vessel including a hybrid propulsion system, comprising a main engine (2), a propeller (4), an electric motor (3), wherein the propeller (4) is drivable by at least one of the main engine (2) and the electric motor (3), an electrical circuit (7) being connected to the electric motor (3) for providing electrical energy to the electric motor (3), and an engine generator set including a generator engine (8) and a generator (9) being connected to the electric circuit (7) for providing electrical energy to the electrical circuit (7), **characterized in that** one of both engines (2, 8) runs on a first main fuel type and the other one (2, 8) runs on a second main fuel type, wherein the first and second main fuel types are different.

2. A vessel according to claim 1, wherein one of both engines (2, 8) is a compression ignition engine, wherein the other one is a spark ignition engine.

3. A vessel according to claim 1 or 2, wherein the first main fuel type is diesel and the second main fuel type is natural gas.

4. A vessel according to one of the preceding claims, wherein both engines (2, 8) are single fuel engines.

5. A vessel according to one of the preceding claims, wherein the main engine is a natural gas engine (2) and the generator engine is a diesel engine (8).

6. A vessel according to one of the preceding claims, wherein the electric motor (3) is adjustable to operate as a generator for providing electrical energy to the electrical circuit (7), wherein the electric motor (3) is drivable by the main engine (2).

7. A vessel according to one of the preceding claims, wherein the main engine, electric motor and propeller form a first propulsion combination (1), wherein the vessel is provided with a second propulsion combination including another main engine running on the same fuel type as the main engine of the first propulsion combination, another electric motor and another propeller, wherein the electrical circuit is configured to provide electrical energy to the electric motors of both propulsion combinations.

8. A vessel according to claim 7, wherein the generator set is a first generator set and the vessel is provided with a second generator set for providing electrical energy to the electrical circuit, wherein the second generator set runs on the same fuel type as the first generator set.
